(19) Europäisches Patentamt / European Patent Office / Office européen des brevets

(11) **EP 4 447 159 B1**

(12) **EUROPEAN PATENT SPECIFICATION**

(45) Date of publication and mention of the grant of the patent: **02.09.2026 Bulletin 2026/36**

(21) Application number: **23843279.3**

(22) Date of filing: **14.07.2023**

(51) International Patent Classification (IPC):
***H01M 4/36*** (2006.01) ***H01M 4/38*** (2006.01)
***H01M 4/48*** (2010.01) ***H01M 4/134*** (2010.01)
***H01M 4/02*** (2006.01)

(52) Cooperative Patent Classification (CPC):
**H01M 4/02; H01M 4/131; H01M 4/133; H01M 4/134; H01M 4/136; H01M 4/36; H01M 4/366; H01M 4/368; H01M 4/38; H01M 4/48; H01M 4/483; H01M 4/485; H01M 4/62; H01M 4/625; H01M 10/0525;** (Cont.)

(86) International application number:
**PCT/KR2023/010079**

(87) International publication number:
**WO 2024/019429 (25.01.2024 Gazette 2024/04)**

(54) **NEGATIVE ELECTRODE ACTIVE MATERIAL, NEGATIVE ELECTRODE INCLUDING SAME, SECONDARY BATTERY INCLUDING SAME, AND METHOD FOR MANUFACTURING NEGATIVE ELECTRODE ACTIVE MATERIAL**

NEGATIVELEKTRODENAKTIVMATERIAL, NEGATIVELEKTRODE DAMIT, SEKUNDÄRBATTERIE DAMIT UND VERFAHREN ZUR HERSTELLUNG EINES NEGATIVELEKTRODENAKTIVMATERIALS

MATÉRIAU ACTIF D'ÉLECTRODE NÉGATIVE, ÉLECTRODE NÉGATIVE LE COMPRENANT, BATTERIE SECONDAIRE COMPRENANT CETTE ÉLECTRODE ET PROCÉDÉ DE FABRICATION DU MATÉRIAU ACTIF D'ÉLECTRODE NÉGATIVE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.07.2022 KR 20220091036**
**13.07.2023 KR 20230090935**

(43) Date of publication of application:
**16.10.2024 Bulletin 2024/42**

(73) Proprietor: **LG Energy Solution, Ltd.**
**Seoul 07335 (KR)**

(72) Inventors:
- **PARK, Heeyeon**
  **Daejeon 34122 (KR)**
- **CHOI, Junghyun**
  **Daejeon 34122 (KR)**
- **SHIN, Sun Young**
  **Daejeon 34122 (KR)**
- **LEE, Yong Ju**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 817 100** **JP-A- 2014 157 817**
**KR-A- 20100 014 993** **KR-A- 20170 074 030**
**KR-A- 20170 074 030** **KR-A- 20180 132 278**
**KR-A- 20210 107 115**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)
H01M 2004/027; Y02E 60/10

## Description

[Technical Field]

The present invention relates to a negative electrode active material, a negative electrode including the same, a secondary battery including the negative electrode, and a method for manufacturing a negative electrode active material.

This application claims priority to and the benefit of Korean Patent Application No. 10-2022-0091036 filed in the Korean Intellectual Property Office on July 22, 2022, and Korean Patent Application No. 10-2023-0090935 filed in the Korean Intellectual Property Office on July 13, 2023,.

[Background Art]

Recently, with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolyte solution, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.

On the other hand, among the silicon-based active materials, a silicon-based oxide, specifically, a silicon-based oxide represented by $SiO_x$ ($0<x<2$) has an advantage in that the degree of volume expansion/contraction during the charging and discharging is lower as compared with other silicon-based active materials such as silicon (Si). However, the silicon-based oxide still has a disadvantage in that the initial efficiency is lowered due to the presence of irreversible capacity.

In this regard, studies have been conducted to reduce the irreversible capacity and to improve the initial efficiency by doping or intercalating metals such as Li, Al, and Mg into silicon-based oxides. However, a negative electrode slurry including a metal-doped silicon-based oxide as a negative electrode active material has a problem in that the metal oxide formed by doping metal reacts with moisture to increase pH of the negative electrode slurry and to change the viscosity. Accordingly, the state of the manufactured negative electrode is poor and the charge/discharge efficiency of the negative electrode is lowered.

Accordingly, there is a need to develop a negative electrode active material capable of improving phase stability of a negative electrode slurry including a silicon-based oxide and improving charge/discharge efficiency of a negative electrode manufactured from the slurry.

Korean Patent No. 10-0794192 relates to a method for manufacturing a carbon-coated silicon-graphite composite negative electrode material for a lithium secondary battery and a method for manufacturing a secondary battery including the same, but has limitations in solving the problems described above. EP 3 817 100 discloses a negative electrode active material comprising a silicon-based particle, having a carbon layer and a Ca-containing inorganic layer provided on a surface thereof.

[Detailed Description of the Invention]

[Technical Problem]

The present invention relates to a negative electrode active material, a negative electrode including the same, a secondary battery including the negative electrode, and a method for manufacturing a negative electrode active material.

[Technical Solution]

An exemplary embodiment of the present invention provides a negative electrode active material including a

silicon-based particle including $SiO_x$(0<x<2) and a Li compound, and having a carbon layer provided on at least a portion of a surface thereof; and a Ca-containing inorganic layer provided on at least a portion on the silicon-based particle.

Another exemplary embodiment of the present invention provides a negative electrode including the negative electrode active material.

Still another exemplary embodiment of the present invention provides a secondary battery including the negative electrode.

Yet another exemplary embodiment of the present invention provides a method for manufacturing the negative electrode active material, the method including: forming a silicon-based particle including $SiO_x$(0<x<2) and a Li compound, and having a carbon layer provided on at least a portion of a surface thereof; and reacting the silicon-based particle with a Ca precursor.

[Advantageous Effects]

Since the negative electrode active material according to an exemplary embodiment of the present invention includes the Ca-containing inorganic layer, there is an effect of improving the aqueous processability of a slurry. Specifically, since the Ca-containing inorganic layer has low reactivity with water, the inorganic layer does not react with water in the aqueous slurry and is well maintained to prevent water from penetrating into the negative electrode active material, thereby effectively passivating the silicon-based particle. In addition, since a side reaction between the silicon-based particle or a lithium by-product and water is prevented to suppress gas generation, there is an effect of improving the aqueous processability of the slurry.

Accordingly, the negative electrode including the negative electrode active material according to an exemplary embodiment of the present invention, and the secondary battery including the negative electrode have effects of improving the discharge capacity, initial efficiency, resistance performance and/or life characteristics of the battery.

[Brief Description of Drawings]

FIG. 1 shows an XRD analysis result of a negative electrode active material of Example 1.

FIG. 2 shows an XRD analysis result of a negative electrode active material of Comparative Example 1.

[Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the negative electrode active material can be confirmed through ICP analysis, and the ICP analysis may be performed using an inductively coupled plasma atomic emission spectrometer (ICPAES, Perkin-Elmer 7300).

In the present specification, the average particle diameter ($D_{50}$) may be defined as a particle diameter corresponding to 50% of the cumulative volume in the particle size distribution curve of the particles (graph curve of the particle size distribution). The average particle diameter ($D_{50}$) may be measured using, for example, a laser diffraction method. In the laser diffraction method, in general, particle diameters ranging from a submicron range to several millimeters can be measured, and results with high reproducibility and high resolvability can be obtained.

Hereinafter, preferred embodiments of the present invention will be described in detail. However, it should be understood that the embodiments of the present invention may be modified in various forms and the scope of the present

invention is not limited to the embodiments described below.

<Negative electrode active material>

An exemplary embodiment of the present invention provides a negative electrode active material including a silicon-based particle including $SiO_x(0<x<2)$ and a Li compound, and having a carbon layer provided on at least a portion of a surface thereof; and a Ca-containing inorganic layer provided on at least a portion on the silicon-based particle.

The negative electrode active material according to an exemplary embodiment of the present invention includes a silicon-based particle. The silicon-based particle includes $SiO_x(0<x<2)$ and a Li compound.

The $SiO_x$ $(0<x<2)$ may correspond to a matrix in the silicon-based particle. The $SiO_x(0<x<2)$ may be a form of including Si and/or $SiO_2$, and the Si may form a phase. That is, x corresponds to a ratio of the number of O to Si included in the $SiO_x(0<x<2)$. When the silicon-based particle includes the $SiO_x(0<x<2)$, a discharge capacity of a secondary battery can be improved.

The Li compound may correspond to a dopant in the silicon-based composite particle. The Li compound may exist in a form of at least one of a lithium atom, lithium silicate, lithium silicide or a lithium oxide in the silicon-based particle. When the silicon-based particle includes a Li compound, the initial efficiency is improved.

The Li compound may be distributed on the surface and/or in the inside of the silicon-based particle in the form of being doped to the silicon-based particle. The Li compound may be distributed on the surface and/or in the inside of the silicon-based particle to serve to control volume expansion/contraction of the silicon-based particle to an appropriate level and to prevent damage to the active material. In addition, the Li compound may be contained, in terms of lowering a ratio of an irreversible phase (for example, $SiO_2$) of silicon-based oxide particle to increase the efficiency of the active material.

In an exemplary embodiment of the present invention, the Li compound may be present in a form of lithium silicate. The lithium silicate is represented by $Li_aSi_bO_c(2\leq a\leq 4, 0<b\leq 2, 2\leq c\leq 5)$ and may be divided into crystalline lithium silicate and amorphous lithium silicate. The crystalline lithium silicate may be present in the silicon-based particles in a form of at least one lithium silicate selected from the group consisting of $Li_2SiO_3$, $Li_4SiO_4$ and $Li_2Si_2O_5$, and the amorphous lithium silicate may have a complex form of $Li_aSi_bO_c(2\leq a\leq 4, 0<b\leq 2, 2\leq c\leq 5)$. However, the present invention is not limited thereto.

In an exemplary embodiment of the present invention, Li may be included in an amount of 0.1 part by weight to 40 parts by weight, or 0.1 part by weight to 25 parts by weight, on the basis of 100 parts by weight of the total of the negative electrode active material. Specifically, Li may be included in an amount of 1 part by weight to 25 parts by weight, and more specifically, 2 parts by weight to 20 parts by weight. As the Li content increases, the initial efficiency increases, but the discharge capacity decreases. Therefore, when the above range is satisfied, appropriate discharge capacity and initial efficiency can be implemented.

The content of the Li element can be confirmed through ICP analysis. Specifically, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of an element to be analyzed. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the element content of the prepared negative electrode active material can be analyzed.

In an exemplary embodiment of the present invention, the silicon-based particle may include a further metal atom. The metal atom may be present in the form of at least one of a metal atom, a metal silicate, a metal silicide and a metal oxide in the silicon-based particle. The metal atom may include at least one selected from the group consisting of Mg, Li, Al and Ca. Accordingly, initial efficiency of the negative electrode active material may be improved.

In an exemplary embodiment of the present invention, the silicon-based particle is provided with a carbon layer on at least a portion of a surface thereof. In this case, the carbon layer may be coated on at least a portion of the surface, i.e., may be partially coated on the surface of the particle, or may be coated on the entire surface of the particle. Conductivity is imparted to the negative electrode active material by the carbon layer, so that the initial efficiency, life characteristics, and battery capacity characteristics of a secondary battery can be improved.

In an exemplary embodiment of the present invention, the carbon layer includes amorphous carbon.

Further, the carbon layer may further include crystalline carbon.

The crystalline carbon may further improve conductivity of the negative electrode active material. The crystalline carbon may include at least one selected from the group consisting of fullerene , carbon nanotubes, and graphene.

The amorphous carbon may appropriately maintain the strength of the carbon layer to suppress expansion of the silicon-based particle. The amorphous carbon may be a carbide of at least one substance selected from the group

consisting of tar, pitch, and other organic materials, or may be a carbon-based material formed by using a hydrocarbon as a source of chemical vapor deposition.

The carbide of the other organic materials may be an organic carbide selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 part by weight to 50 parts by weight, 0.1 part by weight to 30 parts by weight, or 0.1 part by weight to 20 parts by weight on the basis of 100 parts by weight of the total of the negative electrode active material. More specifically, the carbon layer may be included in an amount of 0.5 part by weight to 15 parts by weight, 1 part by weight to 10 parts by weight, or 1 part by weight to 5 parts by weight. When the above range is satisfied, reduction in capacity and efficiency of the negative electrode active material can be prevented.

In an exemplary embodiment of the present invention, a thickness of the carbon layer may be 1 nm to 500 nm, and specifically 5 nm to 300 nm. When the above range is satisfied, the conductivity of the negative electrode active material is improved, the change in volume of the negative electrode active material is easily suppressed, and the side reaction between the electrolyte solution and the negative electrode active material is suppressed, thereby improving the initial efficiency and/or life of the battery.

Specifically, the carbon layer may be formed by chemical vapor deposition (CVD) using at least one hydrocarbon gas selected from the group consisting of methane, ethane and acetylene.

In an exemplary embodiment of the present invention, a Ca-containing inorganic layer is provided on at least a portion on the silicon-based particle. Specifically, during the manufacture of a negative electrode active material, a silicon-based particle having a carbon layer provided on at least a portion of a surface thereof is formed, Li is doped, and then a Ca precursor is used to introduce a Ca-containing inorganic layer onto at least a portion on the silicon-based particle.

The Ca-containing inorganic layer may include a Ca-containing inorganic material. In addition, the inorganic layer may further include, for example, other materials present in the process of reacting the Ca precursor and the silicon-based particle.

Since the Ca-containing inorganic layer formed as described above does not dissolve well in water and has low reactivity with water, the inorganic layer does not react with water in the aqueous slurry and is well maintained, preventing water from penetrating into the negative electrode active material to effectively passivate the silicon-based particle. In addition, the elution of the Li compound included in the silicon-based particle is prevented to prevent the slurry from being basic, so that the aqueous processability is improved. Moreover, since the Ca precursor for forming the Ca-containing inorganic layer is easy to synthesize salt and is relatively easy to obtain, it is more advantageous to achieve the effects described above.

In an exemplary embodiment of the present invention, the Ca-containing inorganic layer may be provided on at least a portion on the carbon layer, or may be provided on at least a portion of a region of the surface of the silicon-based particle where the carbon layer is not provided.

The Ca-containing inorganic layer may be partially coated on the surface of the silicon-based particle or the carbon layer, or may be coated on the entire surface. A shape of the Ca-containing inorganic layer may be an island type or a thin film type, and specifically, may be provided in an island type.

The Ca-containing inorganic layer includes at least one selected from the group consisting of $CaCO_3$, CaO and $Ca(OH)_2$. Specifically, the Ca-containing inorganic layer may include $CaCO_3$ or $Ca(OH)_2$. The components of the Ca-containing inorganic layer are not limited thereto, and may include, for example, a Ca-containing inorganic material that can be formed using a Ca precursor known in the art.

The components included in the negative electrode active material can be identified through X-ray diffraction analysis (XRD) or SEM-EDX.

In an exemplary embodiment of the present invention, a peak may exist at 29° or greater and 30° or less during the X-ray diffraction analysis (XRD) of the negative electrode active material. The peak appearing at 29° or greater and 30° or less may be a peak due to Ca and may exist in the form of a shoulder peak.

In an exemplary embodiment of the present invention, an additional peak may exist at 28° or greater and less than 29° during the X-ray diffraction (XRD) analysis of the negative electrode active material. The peak appearing at 28° or greater and less than 29° may be a peak due to Si, and the peak due to Ca may exist in the form of a shoulder peak on a right side of the peak due to Si.

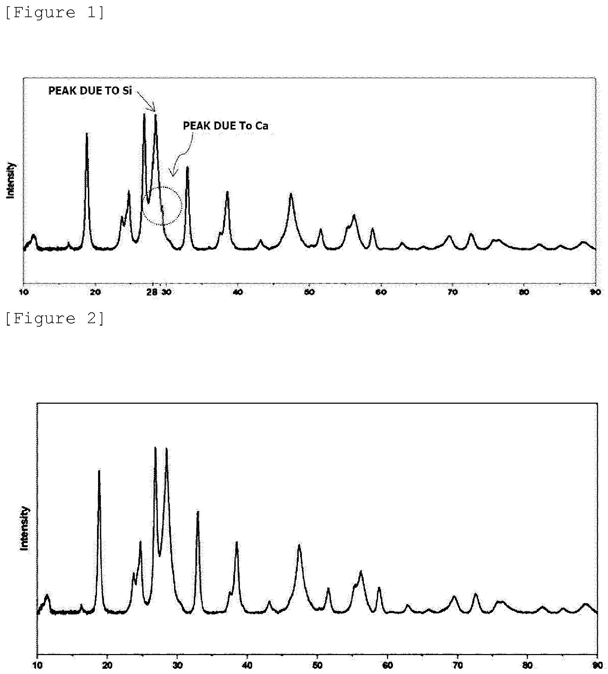

In an example, FIG. 1 shows an XRD analysis graph of a negative electrode active material manufactured in

Example 1 described below, in which it can be confirmed that a peak due to Si appears at 28° to less than 29°, and a peak due to Ca is detected in the form of a shoulder peak at 29° to 30°.

In the present invention, a content of Ca on the surface of the negative electrode active material can be analyzed through scanning electron microscopy-energy dispersive X-ray spectroscopy (SEM-EDX). Specifically, the content can be analyzed under conditions of an accelerating voltage of 15 kV and a working distance of 15 mm with a Hitachi S-4800.

In an exemplary embodiment of the present invention, in the analysis of the negative electrode active material by scanning electron microscopy-energy dispersive X-ray spectroscopy (SEM-EDX), the Ca may be included in an amount of 0.05 part by weight to 10 parts by weight. Specifically, the Ca may be included in an amount of 0.1 part by weight to 5 parts by weight or 0.5 part by weight to 4 parts by weight. The upper limit of the content of the Ca may be 10 parts by weight, 8 parts by weight, 5 parts by weight, or 4 parts by weight, and the lower limit may be 0.05 part by weight, 0.1 part by weight, 0.3 part by weight, 0.5 part by weight, 0.7 part by weight, or 0.8 part by weight. The content of Ca may be based on a region on the surface of the negative electrode active material analyzed by SEM-EDX under conditions of an accelerating voltage of 15 kV and a working distance of 15 mm.

In an exemplary embodiment of the present invention, the Ca may be included in an amount of 0.005 part by weight to 5 parts by weight on the basis of 100 parts by weight of the total of the negative electrode active material. Specifically, the Ca may be included in an amount of 0.01 part by weight to 3 parts by weight or 0.1 part by weight to 2 parts by weight. The upper limit of the content of the Ca may be 5 parts by weight, 4 parts by weight, 3 parts by weight, or 2 parts by weight, and the lower limit may be 0.005 part by weight, 0.01 part by weight, 0.1 part by weight, 0.2 part by weight, or 0.3 part by weight.

In an exemplary embodiment of the present invention, the Ca-containing inorganic layer may be included in an amount of 0.01 part by weight to 10 parts by weight on the basis of 100 parts by weight of the total of the negative electrode active material. Specifically, the Ca-containing inorganic layer may be included in an amount of 0.1 part by weight to 5 parts by weight, 0.4 part by weight to 5 parts by weight, or 0.5 part by weight to 4 parts by weight. The upper limit of the content of the Ca-containing inorganic layer may be 10 parts by weight, 8 parts by weight, 6 parts by weight, 5 parts by weight, 4 parts by weight, or 3.5 parts by weight, and the lower limit may be 0.01 part by weight, 0.05 part by weight, 0.1 part by weight, 0.2 part by weight, 0.3 part by weight, 0.4 part by weight, 0.5 part by weight, 0.6 part by weight, or 0.7 part by weight.

When the content range as described above is satisfied, the aqueous processability is improved by preventing reaction of the negative electrode active material with moisture or elution of lithium by-products in the aqueous slurry. On the other hand, when the content exceeds the above range, the capacity and efficiency of the negative electrode active material are reduced because the Ca-containing inorganic layer does not participate in the electrochemical reaction. When the content is less than the above range, there is a problem in that the Ca-containing inorganic layer cannot properly fulfil its passivation role.

In an exemplary embodiment of the present invention, a lithium by-product provided on at least a portion on the silicon-based particle may be further included. Specifically, the lithium by-product may be present on the surface of the silicon-based particle or on the surface of the carbon layer. In addition, the lithium by-product may be present between the Ca-containing inorganic layer and the silicon-based particle.

Specifically, the lithium by-product may refer to a lithium compound remaining near the surface of the silicon-based particle or the carbon layer after the silicon-based particle is manufactured. As described above, even after the acid treatment process, unreacted lithium by-products with the acid may remain.

The lithium by-product may include one or more selected from the group consisting of $Li_2O$, LiOH and $Li_2CO_3$.

Whether or not the lithium by-product exists can be confirmed through X-ray diffraction analysis (XRD) or X-ray photoelectron analysis (XPS).

The lithium by-product may be included in an amount of 5 parts by weight or less on the basis of on 100 parts by weight of the total of the negative electrode active material. Specifically, the lithium by-product may be included in an amount of 0.001 part by weight to 5 parts by weight, 0.01 part by weight to 5 parts by weight, 0.05 part by weight to 2 parts by weight, or 0.1 part by weight to 1 part by weight. More specifically, the lithium by-product may be included in an amount of 0.1 part by weight to 0.8 part by weight or 0.1 part by weight to 0.5 part by weight. When the content of the lithium by-product satisfies the above range, the side reaction in the slurry can be reduced and the change in viscosity can be reduced, thereby improving the aqueous processability characteristics. On the other hand, when the content of the lithium by-product is higher than the above range, the slurry becomes basic when formed, which causes a side reaction or a change in viscosity and problems in the aqueous processability.

The content of the lithium by-product can be calculated by measuring an amount of a HCl solution in a specific section where pH changes in a process of titrating an aqueous solution including the negative electrode active material with the HCl solution using a titrator, and then calculating an amount of the lithium by-product.

An average particle diameter (D50) of the negative electrode active material may be 0.1 μm to 30 μm, specifically 1 μm to 20 μm, and more specifically 1 μm to 10 μm. When the above range is satisfied, the structural stability of the active material is ensured during charging and discharging, a problem that a level of volume expansion/contraction increases as the particle diameter becomes excessively large can be prevented, and a problem that the initial efficiency is reduced as

the particle diameter becomes excessively small can also be prevented.

<Method of manufacturing negative electrode active material>

An exemplary embodiment of the present invention provides a method for manufacturing the negative electrode active material, the method including: forming a silicon-based particle including $SiOx(0<x<2)$ and a Li compound, and having a carbon layer provided on at least a portion of a surface thereof; and reacting the silicon-based particle with a Ca precursor.

The silicon-based particle may be formed through a step of heating and vaporizing Si powder and $SiO_2$ powder under vacuum, a step of depositing the vaporized mixed gas to form a preliminary particle; a step of forming a carbon layer on a surface of the formed preliminary particle, and a step of mixing and heat-treating the preliminary particle having the carbon layer formed thereon and Li powder.

Specifically, the mixed powder of the Si powder and $SiO_2$ powder may be heat-treated at 1300°C to 1800°C, 1400°Cto 1800°C or 1400°C to 1600°C under vacuum.

The formed preliminary particle may have a form of SiO.

The carbon layer may be formed by using chemical vapor deposition (CVD) using hydrocarbon gas or by carbonizing a material serving as a carbon source.

Specifically, the carbon layer may be formed by putting the formed preliminary particle into a reactor, and then depositing the hydrocarbon gas at 600°C to 1200°C by chemical vapor deposition (CVD). The hydrocarbon gas may be at least one hydrocarbon gas selected from the group consisting of methane, ethane, propane and acetylene, and may be heat-treated at 900°C to 1000°.

The heat treatment step after mixing the preliminary particle having the carbon layer formed thereon and Li powder may be performed at 700°C to 900°C for 4 hours to 6 hours, specifically at 800°C for 5 hours.

The silicon-based particle may include, as the Li compound described above, a Li silicate, a Li silicide, a Li oxide, or the like.

The particle size of the silicon-based particle may be adjusted through a method such as a ball mill, a jet mill, or air classification, but the present invention is not limited thereto.

A lithium compound (lithium by-product) is provided on at least a portion of the surface of the silicon-based particle having the carbon layer as described above. Specifically, in the processes of forming a preliminary particle including the SiOx $(0<x<2)$, forming a carbon layer on the preliminary particle, and then doping Li to manufacture the silicon-based particle described above, a lithium compound, i.e., a lithium by-product due to unreacted lithium remains near the surface of the silicon-based particle.

In an exemplary embodiment of the present invention, a method for manufacturing the negative electrode active material includes a step of reacting the silicon-based particle with a Ca precursor.

Specifically, the step of reacting the silicon-based particle and the Ca precursor may be performed by mixing the silicon-based particle and the Ca precursor and then heat-treating the mixture.

The mixture of the silicon-based particle and the Ca precursor may be heat-treated at a temperature of 500°C to 1200°C under Ar atmosphere. Specifically, the mixture may be heat-treated at 550°C to 1000°C or 600°C to 800°C for 1 hour to 5 hours or 2 hours to 4 hours. Through the heat treatment process, a Ca-containing inorganic layer is formed on the surface of the silicon-based particle.

The Ca precursor may be, for example, $Ca(OAc)_2$, $CaCl_2$, CaO or $Ca(NO_3)_2$. However, the present invention is not limited thereto, and Ca precursors known in the art may be appropriately employed and used.

A content of the Ca precursor may be 0.01 part by weight to 20 parts by weight, specifically 0.1 part by weight to 15 parts by weight or 1 part by weight to 12 parts by weight on the basis of a total of 100 parts by weight of the mixture of the silicon-based particle and the Ca precursor. The lower limit of the content of the Ca precursor may be 0.01 part by weight, 0.1 part by weight, 1 part by weight, 2 parts by weight, 3 parts by weight, 4 parts by weight, 5 parts by weight, 6 parts by weight, 7 parts by weight or 8 parts by weight, and the upper limit may be 20 parts by weight, 18 parts by weight, 16 parts by weight, 14 parts by weight, 12 parts by weight or 10 parts by weight.

Specifically, a Ca-containing inorganic layer is formed on the silicon-based particle from the Ca precursor, and the formed inorganic layer easily blocks the reaction between water and the lithium compound or silicon-based particle, thereby suppressing gas generation of the slurry to improve the aqueous processability.

In addition, in the case of using the Ca precursor, a method for synthesizing a Ca-containing inorganic layer is simple, and thus, advantageous in the manufacturing process of the negative electrode active material.

<Negative electrode>

A negative electrode according to an exemplary embodiment of the present invention may include the negative electrode active material described above.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder a thickener and/or a conductive material.

The negative electrode active material layer may be formed by applying a negative electrode slurry including a negative electrode active material, a binder, a thickener, and/or a conductive material to at least one surface of a current collector, and drying and roll-pressing the same.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic material capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as $SiO_\beta(0<\beta<2)$, $SnO_2$, vanadium oxide, lithium titanium oxide, and lithium vanadium oxide; or a composite including the metallic material and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

The negative electrode slurry including the negative electrode active material according to an exemplary embodiment of the present may have pH of 7 to 11 at 25°C. When pH of the negative electrode slurry satisfies the above range, the rheological properties of the slurry are stabilized. On the other hand, when pH of the negative electrode slurry is less than 7 or pH of the negative electrode slurry exceeds 11, carboxymethylcellulose (CMC) used as a thickener is decomposed, resulting in lowering in viscosity of the slurry and a decrease in dispersion degree of the active material included in the slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the current collector. A thickness of the current collector may be 6 $\mu$m to 20 $\mu$m. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately employed.

In an exemplary embodiment of the present invention, a weight ratio of the negative electrode active material and the additional negative electrode active material included in the negative electrode slurry may be 1:99 to 30:70, and specifically 5:95 to 30:70 or 10:90 to 20:80.

In an exemplary embodiment of the present invention, the entire negative electrode active materials included in the negative electrode slurry may be included in an amount of 60 parts by weight to 99 parts by weight, and specifically 70 parts by weight to 98 parts by weight on the basis of 100 parts by weight of a total of solid content of the negative electrode slurry.

In an exemplary embodiment of the present invention, the binder may be included in an amount of 0.5 part by weight to 30 parts by weight, and specifically 1 part by weight to 20 parts by weight, on the basis of 100 parts by weight of the total of the solid content of the negative electrode slurry.

In an exemplary embodiment of the present invention, the conductive material may be included in an amount of 0.5 part by weight to 25 parts by weight, specifically 1 part by weight to 20 parts by weight on the basis of 100 parts by weight of the total of the solid content of the negative electrode slurry.

In an exemplary embodiment of the present invention, the thickener may be included in an amount of 0.5 part by weight to 25 parts by weight, specifically 0.5 part by weight to 20 parts by weight, and more specifically 1 part by weight to 20 parts by weight on the basis of 100 parts by weight of the total of the solid content of the negative electrode slurry.

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a weight of the solid content of the negative electrode slurry may be 20 parts by weight to 75 parts by weight, and specifically 30 parts by weight to 70 parts by weight on the basis of 100 parts by weight of the total of the negative electrode slurry.

<Secondary battery>

A secondary battery according to an exemplary embodiment of the present invention may include the negative electrode according to an exemplary embodiment of the present invention described above. Specifically, the secondary battery may include a negative electrode, a positive electrode, a separator interposed between the positive electrode and the negative electrode, and an electrolyte solution, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 $\mu$m to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose,

regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving lifetime characteristics of the battery, suppressing a decrease in battery capacity, improving discharge capacity of the battery, and the like, in addition to the above-described electrolyte solution components.

Another embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Best Mode

<Examples and Comparative Examples>

Example 1

94g of powders of Si and $SiO_2$ mixed in a molar ratio of 1:1 were mixed in a reactor and vacuum-heated to a sublimation temperature of 1,400°C. Then, a mixed gas of vaporized Si and $SiO_2$ was reacted in a cooling zone in a vacuum state where a cooling temperature was 800°C, and condensed into a solid phase. Then, the condensed particles were pulverized using a ball mill for 3 hours to manufacture silicon-based particles having a size of 6 μm. Thereafter, the silicon-based particles were positioned in a hot zone of a CVD apparatus while maintaining an inert atmosphere by causing Ar gas

to flow, and a reaction was carried out at $10^{-1}$ torr for 20 minutes while blowing methane into a hot zone of 900 °C using Ar as a carrier gas, thereby forming a carbon layer on the surface of the silicon-based particles. Then, after adding 6 g of Li metal powder and conducting additional heat treatment under conditions of an inert atmosphere and a temperature of 800°C, $Ca(OAc)_2$ and silicon-based particles were mixed and introduced in a weight ratio of 2:98 and heated at 650°C for 3 hours in an argon atmosphere to manufacture a negative electrode active material having a Ca-containing inorganic layer formed on the surface of the particles.

Example 2

A negative electrode active material was manufactured in the same manner as in Example 1, except that the weight ratio of $Ca(OAc)_2$ and the silicon-based particles was 10:90.

Example 3

A negative electrode active material was manufactured in the same manner as in Example 1, except that the heat treatment temperature after mixing the silicon-based particles and $Ca(OAc)_2$ was changed to 1,000°C.

Comparative Example 1

A negative electrode active material was manufactured in the same manner as in Example 1, except that the processes of mixing and heat- treating $Ca(OAc)_2$ were not performed.

Comparative Example 2

A negative electrode active material was manufactured in the same manner as in Example 1, except that the processes of introducing and heat-treating the Li metal powder were not performed.

<X-ray diffraction (XRD) analysis of negative electrode active material>

FIG. 1 shows an XRD analysis graph of the negative electrode active material manufactured in Example 1, in which it could be confirmed that a peak due to Si appeared at 28° to less than 29°, and a peak due to Ca was detected in the form of a shoulder peak at 29° to 30°. On the other hand, FIG. 2 shows an XRD analysis graph of the negative electrode active material manufactured in Comparative Example 1, in which a peak due to Si appeared at 28° to less than 29°, but a shoulder peak due to Ca was not detected.

<Analysis of content of carbon layer>

The content of the carbon layer was analyzed using CS-analyzer (CS-800, ELTRA).

<Analysis of Li content included in negative electrode active material>

The Li atom content was confirmed by ICP analysis using an inductively coupled plasma atomic emission spectrometer (ICP-OES, AVIO 500, Perkin-Elmer 7300).

<SEM-EDX analysis of surface of negative electrode active material>

The surface of the negative electrode active material was analyzed by scanning electron microscopy-energy dispersive X-ray spectroscopy (SEM-EDX). Specifically, the surface was analyzed under conditions of an accelerating voltage of 15 kV and a working distance of 15 mm with a Hitachi S-4800.

<Analysis of Ca content and inorganic layer content included in negative electrode active material>

The Ca content was confirmed by ICP analysis using the inductively coupled plasma atomic emission spectrometer (ICP-OES, AVIO 500, Perkin-Elmer 7300), and through this, the Ca content and the content of the inorganic layer contained in the negative electrode active material were analyzed.

<Analysis of $D_{50}$ and specific surface area of negative electrode active material>

$D_{50}$ of the negative electrode active material was analyzed by laser diffraction particle size analysis using a Microtrac S3500 instrument, and the BET specific surface area of the negative electrode active material was measured using a BET measuring instrument (BEL-SORP-MAX, Nippon Bell).

The analysis results of the negative electrode active materials manufactured in the Examples and Comparative Examples described above are shown in Table 1 below.

[Table 1]

| | Based on 100 parts by weight of total of negative electrode active material | | | | Ca content in SEM-EDX surface analysis | $D_{50}$ (μm) of negative electrode active material | Specific surface area ($m^2$/g) of negative electrode active material |
|---|---|---|---|---|---|---|---|
| | Carbon layer (parts by weight) | Li (parts by weight) | Ca (parts by weight) | Ca-containing inorganic layer (parts by weight) | | | |
| Example 1 | 5.7 | 6.4 | 0.35 | 0.74 | 0.87 | 5.0 | 2.2 |
| Example 2 | 5.5 | 6.3 | 1.68 | 3.35 | 3.91 | 5.2 | 2.1 |
| Example 3 | 5.7 | 6.5 | 0.33 | 0.51 | 0.81 | 5.1 | 1.8 |
| Comparative Example 1 | 5.8 | 6.4 | - | - | - | 4.9 | 2.3 |
| Comparative Example 2 | 6.1 | 0.0 | 0.32 | 0.71 | 0.83 | 4.8 | 3.0 |

<Experimental Example: Evaluation of discharge capacity, initial efficiency, and life (capacity retention rate) characteristics>

A negative electrode and a battery were manufactured using the negative electrode active materials of Examples and Comparative Examples, respectively.

A mixture was manufactured by mixing the negative electrode active material, carbon black as a conductive material, and polyacrylic acid (PAA) as a binder in a weight ratio of 80:10:10. Thereafter, 7.8 g of distilled water was added to 5 g of the mixture, which was then stirred to manufacture a negative electrode slurry. The negative electrode slurry was applied to a copper (Cu) metal thin film as a negative electrode current collector having a thickness of 20 μm, and dried. In this case, the temperature of the circulating air was 60°C. Then, the thin film was roll-pressed and dried 130°C for 12 hours in a vacuum oven to manufacture a negative electrode.

A lithium (Li) metal thin film obtained by cutting a lithium (Li) metal foil into a circular shape of 1.7671 $cm^2$ was used as a positive electrode. A porous polyethylene separator was interposed between the positive electrode and the negative electrode, and an electrolyte solution obtained by dissolving vinylene carbonate to 0.5 percent by weight in a mixed solution in which ethyl methyl carbonate (EMC) and ethylene carbonate (EC) were mixed in a volume ratio of 7:3, and dissolving $LiPF_6$ to a concentration of 1M was injected to manufacture a lithium coin half-cell.

The prepared batteries were charged and discharged to evaluate discharge capacity, initial efficiency, and capacity retention rate, which are shown in Table 2.

The charging and discharging were performed at 0.1C for the first cycle and the second cycle, and the charging and discharging were performed at 0.5C from the third cycle to the 49th cycle. At the 50th cycle, the charging and discharging were terminated in a charge state (with lithium contained in the negative electrode).

Charging conditions: CC (constant current)/CV (constant voltage) (5mV/0.005C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation.

Initial efficiency (%) = (first time discharge capacity/first time charge capacity)×100

The capacity retention rate was derived by the following calculation.

Capacity retention rate (%) = (49th time discharge capacity/first time discharge capacity)×100

<Experimental Example: Evaluation of processability (gas generation) characteristics>

As part of the processability evaluation, 20g of the slurry manufactured by mixing graphite, the negative electrode active material, carbon black, CMC and PAA in a weight ratio of 77:20:1:1:1 was put into a pouch of about 10cm*15cm, which was then vacuum sealed, put into an oven at 40°C, and subjected to measurement for volume change.

The gas generation time point (hour) was measured based on the time point at which the volume of the pouch increased by 2 mL or more, as compared with the volume measured immediately after vacuum sealing the pouch. The result is shown in Table 2 below.

[Table 2]

| Battery | Discharge capacity (mAh/g) | Initial efficiency (%) | Capacity retention rate (%) | Gas generation time point (hour) |
|---|---|---|---|---|
| Example 1 | 1423 | 87 | 92 | 48 |
| Example 2 | 1406 | 85 | 90 | 50 |
| Example 3 | 1310 | 85 | 82 | 24 |
| Comparative Example 1 | 1412 | 87 | 80 | 18 |
| Comparative Example 2 | 1790 | 70 | 65 | no gas generation |

The negative electrode active material according to the present invention is characterized in that the Ca-containing inorganic layer is provided on the silicon-based particle including the Li compound. Since the inorganic layer has low reactivity with water, the inorganic layer does not react with water in the aqueous slurry and is well maintained, thereby preventing water from penetrating into the negative electrode active material to effectively passivate the silicon-based particle. In addition, since a side reaction between the silicon-based particle or a lithium by-product and water is prevented to suppress gas generation, there is an effect of improving the aqueous processability of the slurry.

In Table 2 above, in the case of Examples 1 to 3, it is possible to efficiently passivate the silicon-based particles by forming the Ca-containing inorganic layer on the silicon-based particles through the Ca precursor, and therefore, it could be confirmed that the overall discharge capacity, initial efficiency and capacity retention rate were excellent over Comparative Example 1. In addition, the side reaction in the aqueous slurry could be prevented to delay the gas generation time point, thereby ensuring excellent aqueous processability.

In the case of Comparative Example 2, the discharge capacity was high because the silicon-based particles were not doped with Li, and there was no gas generation because no lithium by-product was generated. However, it could be confirmed that the particles were not doped with Li, and thus, the initial efficiency and the capacity retention rate were significantly lowered, as compared with Examples 1 to 3.

Therefore, in the present invention, by providing the negative electrode active material having the Ca-containing inorganic layer provided on the silicon-based particle including the Li compound, the overall aqueous processability, discharge capacity, efficiency, and capacity retention rate could be easily improved by the passivation effect.

## Claims

**1.** A negative electrode active material comprising:

a silicon-based particle comprising $SiO_x$(0<x<2) and a Li compound, and having a carbon layer provided on at least a portion of a surface thereof; and

a Ca-containing inorganic layer provided on at least a portion on the silicon-based particle, wherein the Ca-containing inorganic layer comprises at least one selected from the group consisting of $CaCO_3$, CaO and $Ca(OH)_2$.

**2.** The negative electrode active material of claim 1, wherein a peak exists at 29° or greater and 30° or less in X-ray diffraction analysis.

**3.** The negative electrode active material of claim 1, wherein the Ca-containing inorganic layer is provided in an island type on at least a portion on the silicon-based particle.

**4.** The negative electrode active material of claim 2, wherein an additional peak exists at 28° or greater and less than 29° in the X-ray diffraction analysis.

**5.** The negative electrode active material of claim 1, wherein an element content of the Ca is 0.05 part by weight to 10 parts by weight when analyzed by scanning electron microscopy-energy dispersive X-ray spectroscopy (SEM-EDX).

**6.** The negative electrode active material of claim 1, wherein the Ca is included in an amount of 0.005 part by weight to 5 parts by weight on the basis of 100 parts by weight of a total of the negative electrode active material.

**7.** The negative electrode active material of claim 1, wherein the Ca-containing inorganic layer is included in an amount of 0.01 part by weight to 10 parts by weight on the basis of 100 parts by weight of a total of the negative electrode active material.

**8.** The negative electrode active material of claim 1, further comprising a lithium by-product provided on at least a portion on the silicon-based particle.

**9.** The negative electrode active material of claim 9, wherein the lithium by-product is included in an amount of 5 parts by weight or less on the basis of 100 parts by weight of a total of the negative electrode active material.

**10.** The negative electrode active material of claim 1, wherein Li is included in an amount of 0.1 part by weight to 40 parts by weight on the basis of 100 parts by weight of a total of the negative electrode active material.

**11.** The negative electrode active material of claim 1, wherein the carbon layer is included in an amount of **0.1** part by weight to 50 parts by weight on the basis of 100 parts by weight of a total of the negative electrode active material.

**12.** A method for manufacturing the negative electrode active material of any one of claims 1 to 11, the method comprising:

forming a silicon-based particle including $SiO_x$(0<x<2) and a Li compound, and having a carbon layer provided on at least a portion of a surface thereof; and
reacting the silicon-based particle with a Ca precursor.

**13.** A negative electrode comprising the negative electrode active material of any one of claims 1 to 11.

**14.** A secondary battery comprising the negative electrode of claim **13.**

## Patentansprüche

**1.** Negativelektroden-Aktivmaterial, umfassend:

einen auf Silicium basierenden Partikel, umfassend $SiO_x$ (0<x<2) und eine Li-Verbindung und aufweisend eine Kohlenstoffschicht, die auf zumindest einem Teil einer Oberfläche hiervon vorgesehen ist; und
eine Ca-haltige anorganische Schicht, die auf zumindest einem Teil des Partikels auf Siliciumbasis vorgesehen ist, worin die Ca-haltige anorganische Schicht zumindest eines umfasst, ausgewählt aus der Gruppe, bestehend aus $CaCO_3$, CaO und $Ca(OH)_2$.

**2.** Negativelektroden-Aktivmaterial gemäß Anspruch 1, worin in der Röntgenbeugungsanalyse ein Peak bei 29° oder größer und 30° oder kleiner vorliegt.

**3.** Negativelektroden-Aktivmaterial gemäß Anspruch 1, worin die Ca-haltige anorganische Schicht inselartig auf zumindest einem Teil des Partikels auf Siliciumbasis vorgesehen ist.

**4.** Negativelektroden-Aktivmaterial gemäß Anspruch 2, worin in der Röntgenbeugungsanalyse ein zusätzlicher Peak bei 28° oder größer und kleiner als 29° vorliegt.

5. Negativelektroden-Aktivmaterial gemäß Anspruch 1, worin der Elementgehalt von Ca 0,05 Gewichtsteile bis 10 Gewichtsteile beträgt, wenn mittels Rasterelektronenmikroskopie-energiedispersiver Röntgenspektroskopie (SEM-EDX) analysiert wird.

6. Negativelektroden-Aktivmaterial gemäß Anspruch 1, worin das Ca in einer Menge von 0,005 Gewichtsteilen bis 5 Gewichtsteilen umfasst ist, bezogen auf 100 Gewichtsteile der Gesamtheit des Negativelektroden-Aktivmaterials.

7. Negativelektroden-Aktivmaterial gemäß Anspruch 1, worin die Ca-haltige anorganische Schicht in einer Menge von 0,01 Gewichtsteilen bis 10 Gewichtsteilen umfasst ist, bezogen auf 100 Gewichtsteile der Gesamtheit des Negativelektroden-Aktivmaterials.

8. Negativelektroden-Aktivmaterial gemäß Anspruch 1, ferner umfassend ein Lithium-Nebenprodukt, das auf zumindest einem Teil des Partikels auf Siliciumbasis vorgesehen ist.

9. Negativelektroden-Aktivmaterial gemäß Anspruch 9, worin das Lithium-Nebenprodukt in einer Menge von 5 Gewichtsteilen oder weniger umfasst ist, bezogen auf 100 Gewichtsteile der Gesamtheit des Negativelektroden-Aktivmaterials.

10. Negativelektroden-Aktivmaterial gemäß Anspruch 1, worin Li in einer Menge von 0,1 Gewichtsteilen bis 40 Gewichtsteilen umfasst ist, bezogen auf 100 Gewichtsteile der Gesamtheit des Negativelektroden-Aktivmaterials.

11. Negativelektroden-Aktivmaterial gemäß Anspruch 1, worin die Kohlenstoffschicht in einer Menge von 0,1 Gewichtsteilen bis 50 Gewichtsteilen umfasst ist, bezogen auf 100 Gewichtsteile der Gesamtheit des Negativelektroden-Aktivmaterials.

12. Verfahren zur Herstellung des Negativelektroden-Aktivmaterials gemäß irgendeinem der Ansprüche 1 bis 11, wobei das Verfahren umfasst:

Bilden eines Partikels auf Siliciumbasis, umfassend $SiO_x$ ($0<x<2$) und eine Li-Verbindung, und aufweisend eine Kohlenstoffschicht, die auf zumindest einem Teil einer Oberfläche hiervon vorgesehen ist; und
Umsetzen des Partikels auf Siliciumbasis mit einem Ca-Vorläufer.

13. Negative Elektrode, umfassend das Negativelektroden-Aktivmaterial gemäß irgendeinem der Ansprüche 1 bis 11.

14. Sekundärbatterie, umfassend die negative Elektrode gemäß Anspruch 13.

## Revendications

1. Matériau actif d'électrode négative comprenant :

une particule à base de silicium comprenant du $SiO_x$ ($0<x<2$) et un composé de Li, et présentant une couche de carbone disposée sur au moins une partie d'une surface de celle-ci ; et
une couche inorganique contenant du Ca disposée sur au moins une partie de la particule à base de silicium, dans lequel la couche inorganique contenant du Ca comprend au moins un élément sélectionné dans le groupe consistant en $CaCO_3$, CaO et $Ca(OH)_2$.

2. Matériau actif d'électrode négative selon la revendication 1, dans lequel un pic est présent à 29° ou plus et à 30° ou moins dans une analyse par diffraction des rayons X.

3. Matériau actif d'électrode négative selon la revendication 1, dans lequel la couche inorganique contenant du Ca est disposée selon un agencement de type îlot sur au moins une partie de la particule à base de silicium.

4. Matériau actif d'électrode négative selon la revendication 2, dans lequel un pic supplémentaire est présent à 28° ou plus et à moins de 29° dans l'analyse par diffraction des rayons X.

5. Matériau actif d'électrode négative selon la revendication 1, dans lequel une teneur élémentaire du Ca est de 0,05 partie en poids à 10 parties en poids lorsqu'elle est analysée par microscopie électronique à balayage-spectroscopie

de rayons X à dispersion d'énergie (MEB-EDX).

**6.** Matériau actif d'électrode négative selon la revendication 1, dans lequel le Ca est inclus en une quantité de 0,005 partie en poids à 5 parties en poids sur la base de 100 parties en poids du total du matériau actif d'électrode négative.

**7.** Matériau actif d'électrode négative selon la revendication 1, dans lequel la couche inorganique contenant du Ca est incluse en une quantité de 0,01 partie en poids à 10 parties en poids sur la base de 100 parties en poids du total du matériau actif d'électrode négative.

**8.** Matériau actif d'électrode négative selon la revendication 1, comprenant en outre un sous-produit de lithium disposé sur au moins une partie de la particule à base de silicium.

**9.** Matériau actif d'électrode négative selon la revendication 9, dans lequel le sous-produit de lithium est inclus en une quantité de 5 parties en poids ou moins sur la base de 100 parties en poids du total du matériau actif d'électrode négative.

**10.** Matériau actif d'électrode négative selon la revendication 1, dans lequel le Li est inclus en une quantité de 0,1 partie en poids à 40 parties en poids sur la base de 100 parties en poids du total du matériau actif d'électrode négative.

**11.** Matériau actif d'électrode négative selon la revendication 1, dans lequel la couche de carbone est incluse en une quantité de 0,1 partie en poids à 50 parties en poids sur la base de 100 parties en poids du total du matériau actif d'électrode négative.

**12.** Procédé de fabrication du matériau actif d'électrode négative selon l'une quelconque des revendications 1 à 11, le procédé comprenant :

la formation d'une particule à base de silicium incluant du $SiO_x$ ($0<x<2$) et un composé de Li, et présentant une couche de carbone disposée sur au moins une partie d'une surface de celle-ci ; et
le fait de faire réagir la particule à base de silicium avec un précurseur de Ca.

**13.** Électrode négative comprenant le matériau actif d'électrode négative selon l'une quelconque des revendications 1 à 11.

**14.** Batterie secondaire comprenant l'électrode négative selon la revendication 13.

[Figure 1]

PEAK DUE TO Si
PEAK DUE To Ca
Intensity
10
20
28
30
40
50
60
70
80
90

[Figure 2]

Intensity
10
20
30
40
50
60
70
80
90

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220091036
- KR 1020230090935
- KR 100794192
- EP 3817100 A